# EUROPEAN PATENT SPECIFICATION

(11) **EP 0 392 828 B1**
(45) Date of publication and mention of the grant of the patent: **26.07.1995**
(21) Application number: 90303922.0
(22) Date of filing: 11.04.1990
(51) Int. Cl.: B61D 17/04, B61D 17/00

(54) **Railway car body and its method of manufacture**
Eisenbahnpersonenwagenkasten und dessen Herstellungsverfahren
Caisse de voiture de chemin de fer et son procédé de fabrication

(30) Priority: 14.04.1989 JP 92876/89
(43) Date of publication of application: 17.10.1990
(73) Proprietor: HITACHI, LTD., Chiyoda-ku, Tokyo 100 (JP)
(72) Inventor: Masai, Kentaro, Kudamatsu-Shi, Yamaguchi-Ken (JP); Okuno, Sumio, Kudamatsu-Shi, Yamaguchi-Ken (JP); Okamoto, Seiichi, Kudamatsu-Shi, Yamaguchi-Ken (JP); Ohmura, Keiji, Kudamatsu-Shi, Yamaguchi-Ken (JP)
(74) Representative: Paget, Hugh Charles Edward

(56) References cited:
- BE-A- 508 069
- DE-A- 3 309 736
- FR-A- 2 630 698

## Description

The present invention relates to a car body of railway rolling stock and a method for fabricating a car body and, more particularly, to a car body of railway rolling stock and a method for fabricating a car body suitable for passenger cars or electric passenger cars.

Generally, car bodies of rolling stock are produced of light alloys such as aluminum alloys, steel for structural use or stainless steel materials. In the car bodies of rolling stock, the whole body has been made up mainly of one kind of material.

A car body produced of a stainless steel material has a long life because the stainless steel is less liable to corrosion than aluminum alloy and steel for structural use. A stainless steel body, however, requires a special surface treatment of its outer places when the body surface is to be painted. Therefore, the stainless steel body requires much time and labour for painting work. A car body built of an aluminum alloy material is light in weight and easy to paint the body. However an aluminum alloy is much more expensive than stainless steel. Therefore the material cost of aluminum alloy car body is much bigger than that of stainless steel body and body built of steel for structural use. However, the steel material for structural use is susceptible to corrosion as compared with the stainless steel and heavier than the aluminum alloy material. The car body built of steel for structural use is heavier than the aluminum alloy body and has a shorter service life than the stainless steel body.

There have recently been developed various technologies for joining different kinds of materials. Also there has been achieved improvement in the strength of the connecting section of materials, thereby enabling the combination of different kinds of materials, for example a light alloy material and a steel material for structural use. In the meantime, the number of railway cars equipped with control equipment and air-conditioning apparatus on the undersurface of an underframe has been increasing these days. In a car body described above, it is imperative to constitute the underframe such that the aforementioned various equipment can be mounted on the undersurface of the underframe as easily as possible. The underframe, therefore, is built of a plurality of extruded shapes of aluminum alloy formed integral with a rail sturdy enough to support the various equipment. The plurality of the extruded shapes of aluminum alloy extend in the longitudinal direction of the car body, being arranged in parallel with the direction of width of the car body and joined with one another by welding. A side framing is constituted of a stainless steel material or a steel material for structural use. A car body using an underframe made up of the extruded shapes of aluminum alloy joined with the side framing is known. Such a car body of the above-described constitution has been disclosed in for example Japanese Laid-Open Utility Model No. 60-108584. In this car body, the whole body of the underframe is composed of extruded shapes of aluminum alloy, without giving a due consideration to the reduction of a material cost fabricating the underframe itself.

Furthermore, another example of a car body underframe composed of extruded shapes of aluminum alloy has been disclosed in Japanese Laid-Open Patent No. 62-94466. This underframe has an equipment mounting section provided separately from sections for others and built in one frame by assembling and joining these sections. Since this underframe is generally constituted of the extruded shapes of aluminium alloy, material cost increases.

DE-A-3309736 discloses a car body of railway rolling stock comprising a roof framing, two side framings, two end framings and an underframe which is constituted of a center underframe formed of extruded light alloy, while the two side framings are each constituted of framing members formed of a ferrous material.

A first object of the invention is to provide a car body of railway rolling stock capable of minimizing a material cost of the whole car body and facilitating the mounting of various kinds of equipment to be mounted on the undersurface of an underframe. A second object is to provide a car body of railway rolling stock capable of preventing a trouble likely to be caused by corrosion in addition to the first object. A third object is to provide a car body of rolling stock capable of facilitating the painting of at least car body sides in addition to the first or second object.

According to a first aspect of the invention, there is provided a car body of railway rolling stock as specified in claim 1.

According to a second aspect of the invention, there is provided a car body of railway rolling stock as specified in claim 15.

According to a third aspect of the invention, there is provided a method for fabricating a car body of railway rolling stock as specified in claim 16.

In the invention, the underframe is composed of a center underframe formed of extruded shapes of a light alloy and end underframe formed of a ferrous material. The center and end underframes are connected by a coupling means at each longitudinal end of the car body.

The present invention can also provide, in the underframe, a coupling means capable of smoothly transmitting, between the center underframe and the end underframe, a car end load passing to the underframe through a coupler.

Another available feature of the present invention is, in the underframe, to decrease the weight of a side sill by decreasing the plate thickness of the side sill constituting the end underframe, by transmitting the car end load by the center underframe.

Another feature of the present invention is, in the underframe, to reduce the weight of the whole body of the underframe.

Other optional features of the present invention will be apparent from the following description of embodiments of the present invention.
Fig. 1 is a perspective view, partly in cross section, of a car body according to one embodiment of the present invention;
Fig. 2 is a perspective view showing the whole body of the car body shown in Fig. 1;
Fig. 3 is a plan view showing an underframe of the car body shown in Fig. 1;
Fig. 4 is a sectional view taken along line IV-IV of Fig. 3;
Fig. 5 is a sectional view taken along line V-V of Fig. 3;
Fig. 6 is a sectional view taken along line VI-VI of Fig. 5;
Figs. 7, 8, 9 and 10 are sectional views showing a plurality of other embodiments of the present invention showing joined sections between a side sill and a center underframe;
Fig. 11 is a sectional view showing a joined section between an end underframe and a center underframe in another embodiment of the car body according to the present invention;
Fig. 12 is a plan view showing the joined section of the end underframe and the center underframe of Fig. 11;
Figs. 13, 14, 16 and 17 are sectional views of a plurality of other embodiments of the car body according to the present invention, showing joined sections of the end underframe and the center underframe; and
Fig. 15 is a sectional view taken along line XV-XV of Fig. 14.

Hereinafter a plurality of embodiments of the present invention will be described with reference to a plurality of drawings.

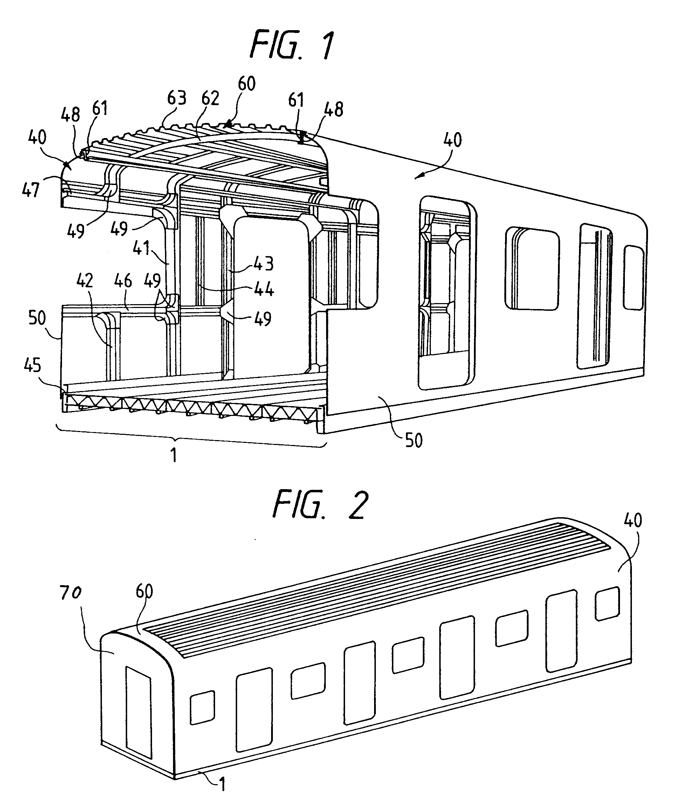

First, one embodiment of a car body of railway rolling stock according to the present invention will be explained with reference to Figs. 1 to 6. In the drawings, an underframe 1 constitutes the undersurface of the car body. A side framing 40 constitutes both sides of the car body. A roof framing 60 constitutes an upper surface, or a roof section, of the car body. And an end frame 70 constitutes car body ends in the longitudinal direction of the car body.

The side framing 40 is made up of such side frames as side posts 41, studs 42, door posts 43, stiffeners 44, rocker rails 45, belt rails 46, window heads 47 and cant rails 48, which are combined and joined through joining members 49, and by joining a side outer plate 50 on the outside of these side frame members. The side frame members and the side outer plate 50 are produced of steel for structural use. The roof framing 60 is constituted by assembling and joining such roof frame members as cant rails 61 and carlines 62, and also by joining roof outer plate 63 on the outside of these roof frame members. The roof outer plates 63 are stainless steel plates, which have corrugated sections. The roof frame members are produced from stainless steel or steel for structural use. The end framing 70 is constituted by assembling end frame members such as corner posts, end posts, end places and stiffeners and by joining them through joining members and also by joining end outer places to the outside of these end frame members. The end frame members and the end outer places are produced of steel for structural use. The detailed construction of the end framing 70 is not illustrated.

The underframe 1 is composed of a center underframe 2 and an end underframe 3. The center underframe 2 is built by parallelly joining a plurality of extruded shapes 4 of aluminum alloy. The extruded shapes 4 extend in the longitudinal direction of the car body of the underframe, being parallelly arranged in the direction of width of the car body, on the underframe. The extruded shape 4 has a hollow part 4a inside, and is formed integral with an equipment attaching rail 4b for supporting various equipment such as control equipment or air-conditioning apparatus on the undersurface.

The end underframe 3 is composed of side sills 5, end beams 6, center sills 7, 8, a body bolster 9, cross beams 10 and a floor member 11. The two side sills 5 extending in the longitudinal direction of the car body are arranged at both ends of the underframe in the direction of width of the car body, these ends being connected by the two end beams 6. The body bolster 9 is located close to the center of the underframe in the longitudinal direction of the car body rather than the end beams 6. This body bolster 9 is disposed correspondingly to the center of the truck. The two center sills 7 are disposed parallelly with the side sills 5 between the end beams 6 located at both ends of the underframe in the longitudinal direction of the car body and the body bolster 9. Each end of these center sills is joined to the end sill 6 and the body bolster 9. A spacing between the two center sills is wide enough to install a coupler therebetween. The two cross beams 10 are disposed parallelly with the body bolsters 6 between the two side sills 6, with their ends connected to the side sills. The cross beams 10 are arranged close to the center of the underframe in the longitudinal direction of the car body rather than the body bolster 9. The side sills 5, the end beams 6, the center sills 7, 8, the body bolster 9 and the cross beams 10 are produced of steel for structural use or stainless steel. The floor member 11 is installed to cover the upper surface of the center sills 7, 8, the body bolster 9 and the cross beams 10 which are located between the two side sills 5. The floor member 11 is constituted of a keystone plate 11a produced of steel for structural use or stainless steel. A keystone plate 1b is a joining member for joining the keystone plate 11a with the center underframe 2 and has also a function as a floor member. The keystone plates 11a and 11b have a corrugated section in the direction of width of the car body. One end of the keystone plate 11a in the longitudinal direction of the car body is connected to the end beam 6, while the other end in the longitudinal direction of the car body is mounted on the upper surface of the cross beam 10. One end of the keystone plate 11b in the longitudinal direction of the car body is connected by welding to the end of the center underframe 2 in the longitudinal direction of the car body, and the other end in the longitudinal direction of the car body extends as far as the upper surface of the cross beam 10. The keystone plates 11a and 11b are overlapped above the cross beam 10, being joined by rivets 12 to the upper flange of the cross beam 10. The rivets 12 are joining means, which may be substituted for by for example blind rivets, bolts and nuts, and rivet bonding.

Of a plurality of extruded shapes 4 constituting the center underframe, the extruded shape 4 located adjacent to the side sill 5 is formed integral with a flange 4c, which is coupled with an upper flange 5a of the side sill 5. The flange 4c and the upper flange 5a are joined by blind rivets 13. The end in the direction of width of the car body of the extruded shape 4 located adjacent to the side sill 5 and a lower flange 5b of the side sill 5 are connected by means of a coupling member 14. The coupling member 14 has a "Z" section. The coupling member 14 and the extruded shape 4 and the lower flange 5b are joined by the blind rivets 13. A hole 4d is provided in the extruded shape 4 for the insertion of the blind rivet 13. The coupling member 14 has a hole 14a, which is used for joining by spot welding a rocker rail 45 constituting the side framing 40 and the side sill 5 in a position indicated by the arrow W. The blind rivets 13 are joining means, which may be substituted for by for example rivets, bolts and nuts, and rivet bonding.

The coupling member 14 may be produced of any one of steel for structural use, stainless steel, and aluminum alloy. Also the coupling 24 of steel for structural use or a stainless steel can be directly joined by welding to the lower flange 5b. Further, the coupling member 14 of aluminum alloy can be jointed directly by welding to the lower surface or the side surface of the extruded shape 4.

The steel for structural use usable for the coupling members 14 described above are for example steel for general structures, steel for weather-proof structures, high-tension steel, and steel for welded structures. Stainless steel includes for example austenitic stainless steel. Also light alloys that can be used are JIS A6063, 6NO1, etc.

Next, the car body under fabrication will be described. Two side sills 5, two end beams 6, two center silts 7, two center sills 8, two body bolsters 9, and two cross beams 10 are assembled and joined. Further, the keystone plate 11a is attached to the upper surfaces of the center sills 7, center sills 8, body bolsters 9 and cross beams 10, thus completing the end underframe 3. A plurality of extruded shapes 4 are arranged in the direction of width thereof, being joined to one another by welding. Thereafter, the keystone plate 11b is joined by welding to the end of the plurality of extruded shapes 4 in the longitudinal direction, thereby completing the center underframe 2. The end underframe 3 and the center underframe 2 are fabricated separately. The center underframe 2 is fitted in a space enclosed by the two side sills 5 and two cross beams 10 of the end underframe 3. Then, the flange 4c of the extruded shape 4 and the upper flange 5a of the side sill 5 are connected by the blind rivet 13. A hole is drilled in the overlapped section of the keystone plate 11a, the keystone plate 11b and the upper flange of the cross beam 5, and the rivet member is inserted in the hole. The keystone plate 11a, the keystone plate 11b, and the upper flange of the cross beam 5 are connected by the rivet member, thus completing the underframe 1. The side framing 40, the roof framing 60, and the end framing 70 are fabricated separately from the underframe 1. The underframe 1, the side framing 40, the roof framing 60 and the end framing 70 thus fabricated are assembled by the following procedure. That is, the side framing 40 is disposed on the upper surface of either end of the underframe 1 in the direction of width of the car body, and the end framing 70 is disposed on the upper surface of either end of the underframe 1 in the longitudinal direction of the car body. Joining between the underframe 1 and the side framing 40, between the underframe 1 and the end framing 70, and between the side framing 40 and the end framing 70 is done by spot welding. Furthermore, the roof framing 60 is disposed above the side framing 40 and the end framing 70. And then joining between the side framing 40 and the roof framing 60 and between the end framing 70 and the roof framing 60 is effected by spot welding, thus completing the car body. Then, the side outer plate 50 of the side framing 40 and the end outer plate of the end framing 70 are painted on the surfaces thereof. After the car body has been thus painted, various equipment such as control equipment or air-conditioning apparatus are mounted on the equipment suspension rail 4b of the extruded shapes 4 of the underframe 1.

As described above, the various kinds of members constituting the car body are made up at least of three kinds of materials, thereby enabling the reduction of weight of the car body more than conventional car bodies of steel for structural use and at a lower material cost than light-alloy car bodies. Namely, constituting the center underframe 2 of a plurality of light-alloy extruded shapes can build the underframe 1 of greater rigidity and lighter weight than conventional underframes of steel for structural use that bear the same degree of car-end load. Since the equipment attaching rail 4b is formed integral with each extruded shape 4, it is possible to decrease the number of component parts of the underframe 1, simplify the construction of the underframe, and decrease the number of fabrication processes of the underframe 1, thereby enabling cost and weight reduction of the whole car body. The end underframe 3 is built of a steel for structures or stainless steel of lower price than the light-alloy material. Accordingly, the underframe 1 can be produced at a lower material cost than the underframe the whole body of which is built of the light-alloy material. Also it is possible to prevent the end underframe 3 from corrosion by producing it of a stainless steel. This constitution will be effective when a lavatory or a toilet is set at the end in the longitudinal direction of the car body. Furthermore, since the side framing 40, roof framing 60 and end framing 70 of the car body of the present invention are produced of an inexpensive steel for structures or a stainless steel, the material cost of the whole car body can be diminished as compared with conventional light-alloy bodies. In addition, the roof outer places 63 are produced of a stainless steel. Because the stainless steel is not liable to corrosion, it is unnecessary to take corrosion prevention into consideration and use thicker roof outer places 63, thereby achieving the reduction of weight of the roof framing 60.

By the way, the weight of the roof framing can be decreased by using fiber-reinforced plastic (FRP) roof outer places.

Furthermore, the side outer places 50 of the side framing 40 and the end outer places of the end framing 70 which are produced of steel for structures can be painted without a special surface treatment because of better paintability of the outer places of the steel for structure than the stainless outer places. Therefore, much labour and time are not required for painting the side framing 40 and end framing 70 of the car body. The car body produced of the steel for structural use can fully meet varieties of requirements as to car body design.

In the embodiment of the present invention described above, the center underframe 2 of the underframe 1 is produced of a plurality of extruded shapes of aluminum alloy. The weight of the underframe can be reduced more than the underframe 1 by using many light-alloy cross beams in place of the center underframe 2 in parallel with the body bolster 10 between the side sills 5. Further, it is possible to decrease the cost of the underframe and the car body by using, for the end underframe, a steel for structures and a stainless steel of lower cost than the light-alloy material.

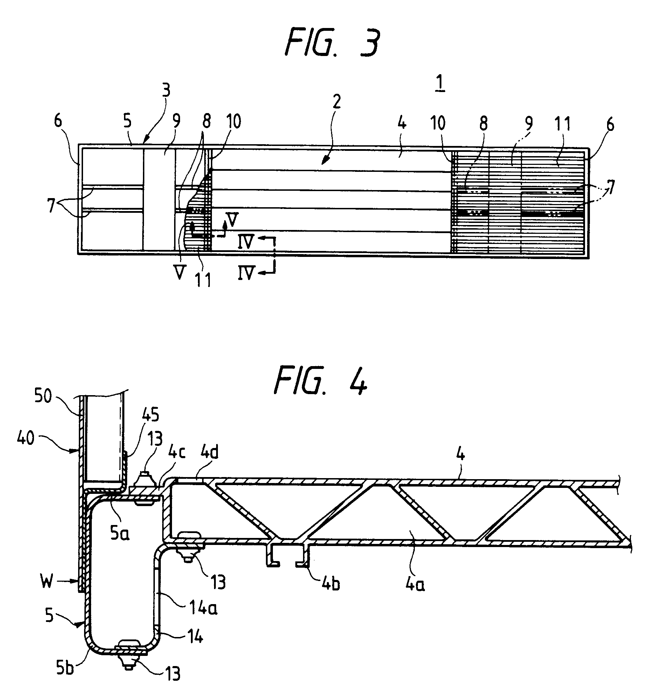

The construction of a joining section between the extruded shapes 4 disposed on both sides in the direction of width of car body of the center underframe 2 and the side sills 5 of the end underframe 3 will be explained with reference to Fig. 4. With the joining flange 4c set on the upper flange 5a, the flange 4c is joined to the upper flange 5a by the blind rivets 13, thus joining the extruded shape 4 to the side sill 5. Also, The end section in the direction of width of the extruded shape 4 is connected to the lower flange 5b by the coupling member 14, thus connecting the extruded shape 4 to the side sill 5. Accordingly the joining section of the extruded shape 4 and the side sill 5 has a box-like sectional form having improved rigidity and durability. However, because of the box-like sectional form of the joining section of the extruded shape 4 and the side sill 5, it is likely that rain water will accumulate therein. It is, therefore, desirable to make the side sills 5 and the coupling member of stainless steel. It is also desirable to provide the side sill with a water drain hole where there is the possibility of water accumulation in the joining section between the extruded section 4 and the side sill 5 as described above. Joining between the underframe 1 and the side framing 40, that is, joining between the side outer plate 50 and the rocker rail 45 and the side sill 5 are effected by spot welding. Plug welding is performed in a joining section, or a body bolster mounting position, between the underframe 1 and the side framing 40, where the spot welding electrode can not be inserted. Since the underframe 1 and the side framing 40 are joined principally by spot welding as described above, joining workability can be improved. It is also possible to lessen distortion occurring in the side framing 40, particularly in the side outer places 50.

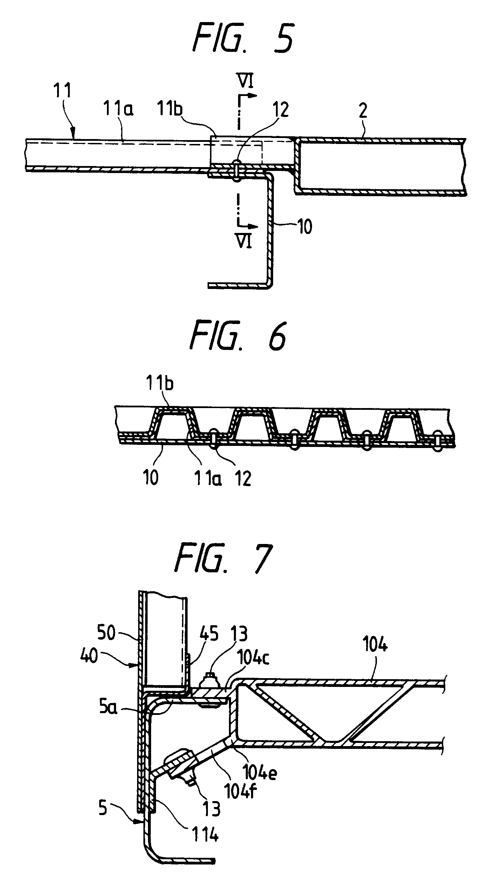

Next, the construction of a joining section of the end of the center underframe 2 in the longitudinal direction of the car body and the cross beam 10 of the end underframe 3 and the floor member 11 will be explained with reference to Figs. 5 and 6. The cross beam 10 and the keystone plate 11a are connected to the center underframe through the keystone plate 11b. Accordingly the car-end load acting on one coupler of the underframe 1 passes to the center underframe 2 through the center sill 7, the body bolster 9, the center sill 8 and the cross beam 10 or through the center sill 7, the body bolster 9 and the keystone plate 11a, and then via the keystone plate 11b. Namely, in the underframe 1, the car-end load acting on one coupler of the underframe is transmitted to the other coupler of the underframe not only along the side sill 5 but along the center underframe 2, thereby enabling the reduction of the car-body load the side sill 5 bears and a decrease in the plate thickness and weight of the side sill 5 itself.

In the underframe 1, the end underframe having the body bolster 9 which transmits the vertical load of the whole car body to the truck is produced of the steel for structural use as described above. Since the underframe 1 is built of high-rigidity material as compared with the underframe the whole body of which is produced of a light-alloy material, the body bolster itself and its surrounding construction can be simplified.

Next, other embodiments of the car body of railway rolling stock according to the present invention will be described with reference to Figs. 7 to 10. These drawings give the construction of the car body of railway rolling stock according to other embodiments of the present invention, showing the joining section of the center underframe and the side sill.

First, the embodiment shown in Fig. 7 differs from the first embodiment previously described, in the construction of the extruded shape 104 equivalent to the extruded shape 4 used in the first embodiment and the construction of the coupling member 114 equivalent to the coupling member 14 in the first, embodiment. In Fig. 7, the same reference numerals as those used in the first embodiment denote the same members as those illustrated in the first embodiment. The extruded shape 104 is formed integral with a joining flange 104e extending towards the web of the side sill 5, in a lower position where the extruded shape 104 comes in contact with the side sill 5. The flange 104e extends obliquely downwardly. The extruded shape 104 has a similar construction as the extruded shape 4 of the first embodiment except for the joining flange 104e. The flange 104e has a hole 104f formed for a blind rivet. The coupling member 114 is formed nearly in the L section. The coupling section 114 is arranged such that one flat section will overlap with the inner surface of the web of the side sill 5, while the other flat section will overlap the joining flange 104e. The coupling member 114 and the flange 104e are joined by the blind rivet 13 at their overlap section. The coupling member 114 and the cross beam 5 are joined by spot welding at their overlap. The joining of the coupling member 114 to the cross beam 5 is done together with spot-welding the rocker rail 45, the side outer plate 50 and the side sill 5. When the center underframe is constituted of the extruded shapes 104, it is difficult to separately fabricate the center underframe and the end underframe. Namely, since the extruded shape 104 has the joining flange 104e, a center underframe completed by joining with other extruded shapes can not be inserted in between the side sills 5 of the end underframe. Therefore when the center underframe is constituted of the extruded shapes 104, it is necessary to install a plurality of extruded shapes simultaneously when building the end underframe.

According to such a constitution, the joining section between the side sill 5 and the extruded shape 104 can be built into a box-like section, thus improving the rigidity of the joining section. Furthermore, since spot welding for joining the side sill 5 with the side framing 40 can be done without using an access hole, workability can be improved. Also, since a spot-welded part can directly visually be checked, the reliability of the joining section between the side sill 5 and the side framing 40 can be improved. Further it is possible to prevent the entrance of rain water into the joining section by closing the hole 104f after completing the joining between the side sill 5 and the side framing 40. The construction according to the present embodiment is effective particularly when using the side sills 5 produced from steel for structural purposes.

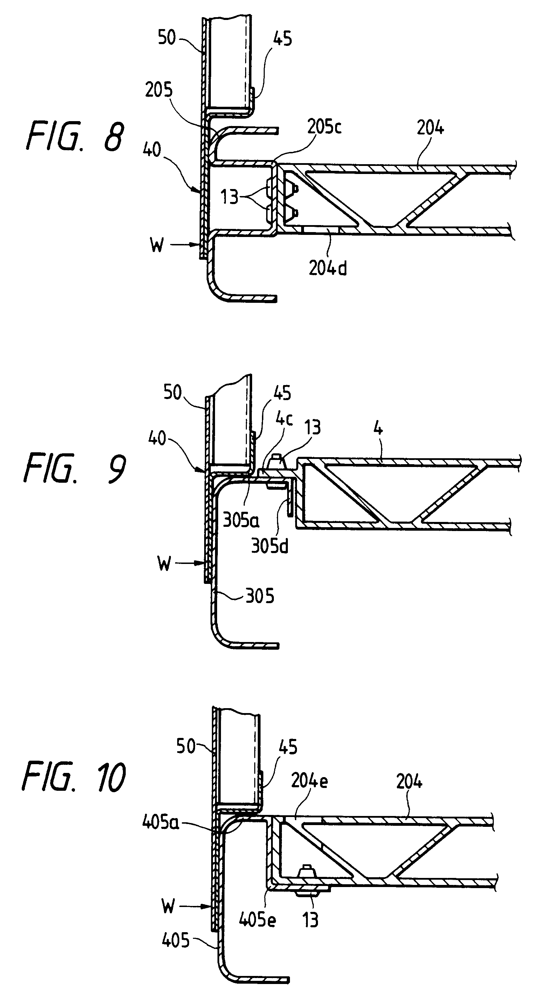

The embodiment shown in Fig. 8 differs in the construction of the extruded shape 204 equivalent to the extruded shape 4 in the first embodiment and in the construction of the side sill 205 equivalent to the side sill appearing in the first embodiment. ln Fig. 8, the same reference numerals as those used in the first embodiment denote the same members as those appearing in the first embodiment. The end face of the extruded shape 204 which comes in contact with the side sill 5 is formed perpendicular to the side sill 5. That is, the extruded shape 204 is not provided with the joining flange 4c, 104e. The side sill 205 has a joining section 205c formed for joining with the extruded shape 204 by projecting the web section toward the center side in the direction of width of the underframe. The joining section 205c is formed by bending a material for constituting the side sill 205. For forming the joining section 205c, a conceivable method is to attach members forming the joining section 205c to the web of the side sill 205 by welding. The joining section 205c is joined by the blind rivet 13 to the end face of a part of the extruded shape 204 which comes in contact with the side silt 5. The extruded shape 204 has, a hole 205d for the blind rivet 13. The side framing 40 and the side sill 205 are joined by spot welding at the position indicated by the arrow W. Namely, the side sill 205 has a vertical web formed for spot welding.

The side sill 205, having the joining section 205c on the web, has greater rigidity than the upper flange of the side sill. According to this embodiment, therefore, it is possible to improve the strength of the whole body of the underframe. Also according to this embodiment, it is unnecessary to join the extruded shape with the side sill by the coupling member as in the first embodiment. Further, the rigidity of the side sill 205 itself can be improved by forming the joining section 205c on the side sill 205. According to this embodiment, the end underframe and the center underframe, which are fabricated separately, can be jointed with ease. The center underframe constituted of the extruded shapes 204 can be inserted in between the side sills 205 installed between both aides of the end underframe in the direction of width, in either upward or downward direction of the end underframe. Furthermore, according to the present embodiment, the positional relation between the upper surface of the side sill 205 and the upper surface of the center underframe constituted of the extruded shapes 204 can be adjusted in the perpendicular direction.

In the embodiment shown in Fig. 9, the construction of the side sill 305 equivalent to the side sill of the first embodiment differs from the first embodiment. In Fig. 9, the same reference numerals as those used in the first embodiment denote the same members as those appearing in the first embodiment. On the upper flange 305a of the side sill 305 is formed a rib 305d at the end section on the central side of the upper flange 305a in the direction of width of the underframe. This rib 305d is formed in parallel with the web of the side sill 305 by bending the forward end section of the upper flange 305a.

According to this embodiment, the upper flange 305d can be improved in rigidity by forming a rib 305d thereon. Therefore, in the construction that the center underframe 4 and the side sill 305 are joined through the flange 4c, the upper flange 305a can be prevented from deformation. The rib 305d can be formed by bending the forward end of the upper flange 305a and therefore can easily be fabricated, the side sill 305 itself being of simple construction.

In the embodiment shown in Fig. 10, the construction of the side sill 405 equivalent to the side sill of the first embodiment differs from that of the first embodiment. In Fig. 10, the same reference numerals used in the first embodiment denote the same members in the first embodiment. The extruded shapes of the present embodiment are nearly of the similar constitution as the extruded shapes shown in Fig. 8. The side sill 405 is provided with a support section 405e which supports the L-sectioned center underframe at the forward end section of the upper flange 405. The support section 405e supports the center underframe in the state that the upper surface of the center section 405e is flush with the upper surface of the side sill 405. The support section 405e and the center underframe 204 are joined by the blind rivet 13. The hole 204e is for mounting the blind rivet 13. When a blind rivet capable of joining the support section 405e to the center underframe 204 from one side is used in place of the aforementioned blind rivet 13, it is unnecessary to make the hole 204e in the center underframe 204.

According to this embodiment, the rigidity of the side sill 405 itself can be improved by forming the support section 405e on the side sill 405. Also it is possible to set the upper surface of the center underframe 204 flush with the upper surface of the side silt 405 simply by mounting the center underframe 204 on the support section 405e, thereby improving operation efficiency in fabricating the underframe.

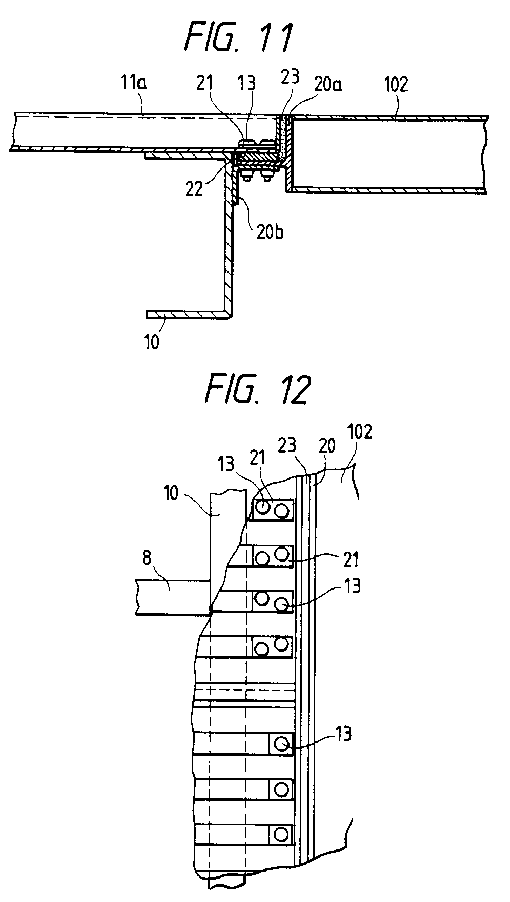

Next, another embodiment of the car body of railway rolling stock according to the present invention will be explained with reference to Figs. 11 to 17. Figs. 11 to 17 show the construction of the joining section of the floor member and cross beam of the end underframe and the center underframe of the car body of railway rolling stock according to another embodiment of the present invention.

The embodiments shown in Figs. 11 and 12 differ from the first embodiment in the construction of the joining members 20a and 20b and in the construction of the keystone plate 11a. In Figs. 11 and 12, the same reference numerals as those used in the first embodiment denote the same members appearing in the first embodiment. The center underframe 102 has basically the identical constitution as the center underframe 2 of the first embodiment. At the end of the center underframe 102 in the longitudinal direction of the car body is joined the joining member 20a. This joining member 20a, produced of aluminum alloy, has a nearly T-form section and is welded to the center underframe 102 by welding. To the web of the cross beam 10 is joined the joining member 20b. This joining member 20b has a nearly L-shaped section and constituted of steel for structural use or stainless steel. The joining member 20b is joined to the cross beam 10 by welding, and has a function to support the center underframe 102 in relation to the cross beam 10, that is, a function as a support member. The end section of the keystone plate 11a on the center section side of the underframe in the longitudinal direction of the car body is extending to a position close to the center underframe 102 rather than the cross beam 10. The keystone plate 11a is overlapped vertically with the joining members 20a and 20b. On the upper surface of the keystone plate 11a is installed a patch 21 correspondingly to these overlapped sections, and a spacer 22 is installed between the keystone plate 11a and the joining member 20a. The patch 21, the keystone plate 11a, the spacer 22, the joining member 20a and joining member 20b are vertically overlappingly installed and joined all together by means of the blind rivet 13. An increased number of the blind rivets 13 are used near the center sill 8 as shown in Fig. 12. Thus increasing the number of the blind rivets 13 facilitates the passage of the car-end load from the center sill 8 to the center underframe 102 or from the center underframe 102 to the center sill 8. Between the end section of the keystone plate 11a on the center side of the underframe in the longitudinal direction of the carbody and the joining member 20a is filled a filling-up material 23. For the filling-up material 23, a polyurethane resin for example is used.

According to the present embodiment, since the joining member 20a is installed between the keystone plate 11a and the joining member 20b, no moment will unnecessarily act on these joining sections. Therefore, if a great car-end load acts among the joining member 20a, the keystone plate 11a and the joining member 20b, these joining sections will not be subjected to deformation, thus providing a greater strength. Also, since a great car-end load can be transmitted among the center underframe 102, the keystone plate 11a and the cross beam 10, the car body load acting on the side sill can be decreased, and accordingly it is possible to decrease the plate thickness of the cross beam, thereby reducing the weight of the cross beam itself.

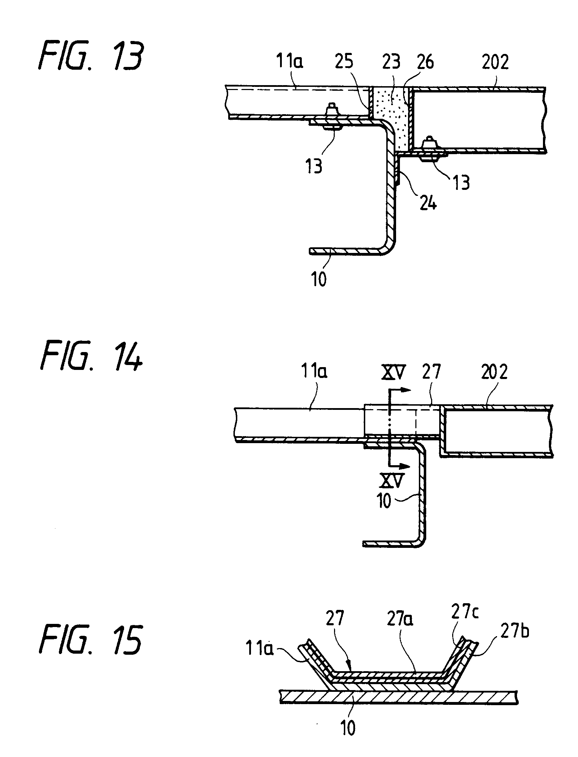

Next, Fig. 13 shows the construction of the joining section among the center underframe 202, the keystone plate 11a and the cross beam 10, which is different from that of the first embodiment. In Fig. 13, the same reference numerals used in the first embodiment denote the same members in the first embodiment. A support member 24 is attached to the web of the cross beam 10, supporting the end of the center underframe 202 in the longitudinal direction of the car body. The support member 24 and the end section of the center underframe 202 in the longitudinal direction are joined by the blind rivet 13. The keystone plate 11a and the cross beam 10 are joined by means of the blind rivet 13. The center underframe 202 has a cover plate 26 attached at the end face in the longitudinal direction of the car body. The keystone plate 11a has a cover plate 25, which is attached at the end face in the longitudinal direction of the car body. Between the cover plate 25 and the cover plate 26 is filled a filling-up material 23. This filling-up material 23 in a set state has strength great enough to transmit the car-end load between the end underframe and the center underframe 202.

According to the present embodiment, the joining section of the end underframe and the center underframe 202 is of a simple construction, thereby enabling easy fabrication of the underframe. Between the end underframe and the center underframe 202 is filled the filling-up material 23, and therefore any dimensional error, if present between these underframes, can easily be permitted. Further, the car-end load can be exactly transmitted through the filling-up material 23 between the end underframe and the center underframe 202.

The embodiment shown in Figs. 14 and 15 differs from the first embodiment in the construction of the joining member 27 and the construction of the joining section among the joining member 27, the keystone plate 11a and the center underframe 202. In these drawings, the same reference numerals used in the first embodiment denote the same members appearing in the first embodiment. The joining member 27 is a clad member made by joining an aluminum alloy plate 27a and a plate 27 of stainless steel or steel for structural use by explosive bonding. The joining member 27 is made by inserting a brazing sheet 27c in between the plate 27a and the plate 27b and joining them by explosive bonding them together. This joining member 27 is produced by joining the places 27a and 27b and then by forming into a corrugated form correspondingly to the sectional form of the keystone plate 11a. The joining member 27 has both an overlapping part and a nonoverlapping part between the plate 27a and the plate 27b. The nonoverlapping part is joined by welding to the keystone plate 11a and the center underframe 202. Namely, the nonoverlapping part between the plate 27a and the plate 27b is joined to the center underframe 202 by welding. Also, a nonoverlapping part between the plate 27b and the plate 27a is joined to the keystone plate 11a by welding.

According to the present embodiment, the joining member 27 can easily be joined by welding the keystone plate 11a to the center underframe 202. Therefore, according to this embodiment, the end underframe and the center underframe 202 can be joined relatively easily by welding. Further, according to this embodiment, labour and time required in fabricating the underframe can be reduced.

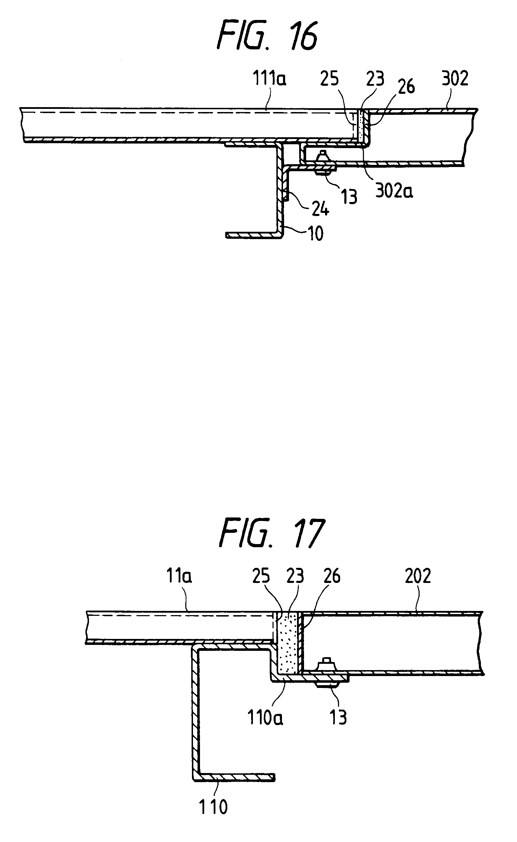

Next, Fig. 16 shows the construction of the center underframe 302 and the keystone plate 111a, which differs from that of the first embodiment. In Fig. 16, the same reference numerals as those used in the first embodiment denote the same members appearing in the first embodiment. The center underframe 302 has a cutout 302a at the end section in the longitudinal direction of the car body. The vertical size of the cutout 302a coincides with that of the keystone plate 111a. That is, when the end of the keystone plate 111a in the longitudinal direction of the car body is set in the cutout 302a, the upper surface of the center underframe 302 is flush with the upper surface of the keystone plate 111a. The cutout 302a is fitted with a cover plate 26. The end section of the keystone plate 111a in the longitudinal direction of the car body protrudes out towards the center underframe 30. Namely, the keystone plate 111a is longer in the longitudinal direction of the car body than the keystone plate 11a of the first embodiment. At the end of the keystone plate 111a in the longitudinal direction of the car body, a cover plate 25 is attached. Between the cover plate 25 and the cover plate 26 is filled the filling-up material 23. The end of the center underframe 302 in the longitudinal direction of the car body is connected to the cross beam 10 through the support member 24. The center underframe 302 and the support member 24 are joined by the blind rivet 13.

According to the present embodiment, because of little amount of filling-up material 23 in addition to a similar effect as each of the embodiments described above, a car-end compression is exactly transmitted. Filling the filling-up material 23 permits a dimensional error of each member and also improves the airtightness of the car body.

Next, Fig. 17 shows the construction of the cross beam 110, which differs from the first embodiment. In Fig. 16, the same reference numerals as those used in the first embodiment represent the same members as those appearing in the first embodiment. The cross beam 110 is made with the upper flange 110a extended toward the center side of the underframe in the longitudinal direction of the car body. The upper flange 11Oa has a nearly Z-sectional form, supporting the end of the center underframe 202 in the longitudinal direction of the car body. The upper flange 110a is joined to the end of the center underframe 202 in the longitudinal direction of the car body by the blind rivet 13. The blind rivet 13 can be inserted from under the lower surface side of the upper flange 110a. The keystone plate 11a and the center underframe 202 are fitted with the cover places 25 and 26 at their end sections as viewed in the longitudinal direction of the car body. Between the cover plate 25 of the keystone plate 11a and the cover plate 26 of the center underframe is filled the filling-up material 23.

According to the present embodiment, since the upper flange 110a supporting the center underframe 202 is formed integral with the cross beam 110, the number of component parts of the underframe can be decreased. Also according to this embodiment, the joining of the end underframe with the center underframe 202 is completed by joining the upper flange 110a with the center underframe 202 after placing the center underframe 202 on the upper surface of the upper flange 110a. Therefore, joining the end underframe with the center underframe 202 can easily be performed. In the embodiment described above, the support section of the center underframe 202 is formed integral with the cross beam 110, but a part corresponding to the upper flange 110a or the support section of the center underframe 202 may be constituted of other members and joined by welding to the cross beam.

In each of the embodiments described above, an example of the end underframe built of steel for structures or stainless steel has been explained. However, it is possible to build the end underframe of a material of high yield strength such as a high-tension steel. Further, the rigidity of the whole body of the underframe can be improved by building the end underframe of the high-tension steel, resulting in a decreased plate thickness of various component members of the underframe and accordingly in the decreased weight of the whole body of the underframe.

According to the present invention, it is possible to provide a car body of railway rolling stock capable of minimizing the material cost of the whole car body and facilitating the mounting of various equipment on the undersurface of the underframe.

According to the present invention, it is also possible to provide a car body of railway rolling stock which, in addition to the above-mentioned effect, has an effect to prevent the occurrence of a trouble likely to be caused by corrosion.

Further according to the present invention, it is possible to provide a car body of railway rolling stock which, in addition to a plurality of effects described above, has an effect to facilitate painting of at least side surfaces of the car body.

## Claims

1. A car body of railway rolling stock comprising a roof framing (60), two side framings (40) each having framing members (41-48) formed of ferrous material, two end framings (70) and an underframe (1), wherein said underframe (1) has a center underframe (2,102,202,302) formed of light-alloy extruded shapes, characterized in that said underframe (1) has an end underframe (3) formed of a ferrous material, in that said roof framing (60) and said two end framings (70) each has outer plate members (63) formed of ferrous material and framing members (61,62) formed of ferrous material, and in that said two side framings (40) also have outer plate members (50) formed of ferrous material.

2. A car body of railway rolling stock as claimed in claim 1, wherein, of a roof outer plate member (63) and roof framing members (61, 62) which constitute said roof framing (60), at least said roof outer plate member (63) is produced of stainless steel.

3. A car body of railway rolling stock as claimed in claim 1 or 2, wherein, of said side outer plate member (5) and said side framing members (41-47) constituting said two side framings (40), at least said side outer plate member (50) is produced of steel for structural use.

4. A car body of railway rolling stock as claimed in one of claims 1 to 3, wherein an end underframe (3) constituting said underframe (1) is produced of stainless steel.

5. A car body of railway rolling stock as claimed in claim 1, wherein said end underframe (3) has a floor member (11) extending in the longitudinal direction of the car body and a cross beam (10) disposed in a position close to the center of the underframe of said end underframe; said center underframe (2, 102, 202) has light-alloy joining member (11b, 20a, 27) to be joined by welding to the end thereof as viewed in the longitudinal direction of the car body; and said joining member (11b, 20a, 27) is connected by a coupling member (13) to at least one of said floor member (11) and said cross beam (10).

6. A car body of railway rolling stock as claimed in claim 5, wherein said floor member (11) is a keystone plate (11a) having a groove extending in the longitudinal direction of the car body, and a joining section of said light-alloy joining member (11b) for joining with the keystone plate has a waved form corresponding to the shape of the groove in said keystone plate.

7. A car body of railway rolling stock as claimed in claim 1, wherein said end underframe (3) has a floor member (11) extending in the longitudinal direction of the car body and a cross beam (10, 110) disposed close to the center of the underframe of said end underframe (3); the cross beam (10, 110) has a coupling flange (20b, 24, 110a) extending toward a center underframe, said joining flange (20b, 24, 110a) being connected to a center underframe (202) through a coupling means (13); and a filling-up material (23) is filled in between the end of said floor member (11) close to said center underframe and the end of said center underframe (202) in the longitudinal direction of the car body.

8. A car body of railway rolling stock as claimed in claim 7, wherein said coupling flange (11Oa) is formed by bending said cross beam (110).

9. A car body of railway rolling stock as claimed in claim 7, wherein said coupling flange is a support member (20b, 24) which is a member separate from said cross beam (10, 110), said support member (20b, 24) being joined by welding to the web of said cross beam.

10. A car body of railway rolling stock as claimed in claim 1, wherein said end underframe (3) has side sills (5, 205, 305, 405) disposed on both sides of the underframe as viewed in the direction of width of the car body and extending in the longitudinal direction of the car body, and said center underframe (2, 102, 202) is disposed between said side sills (5, 205, 305, 405), said side sills (6, 205, 305, 405) being connected with the end of said center underframe (2, 102, 202) in the direction of width of the car body by a coupling means (13).

11. A car body of railway rolling stock as claimed in claim 10, said side sills (5, 305) have flanges (5a, 305a) extending to the center underframe side; said center underframe (2) has a flange (4c, 104c), which extends to the side sill side, at the end as viewed in the direction of width of the car body; and the flange (5a, 305a) of said side sill and the flange (4c, 104c) of said center underframe are overlapped and joined by a coupling member (13).

12. A car body of railway rolling stock as claimed in claim 11, wherein said side sill (5) has on its upper part an upper flange (5a) extending on the center underframe side and on its lower part a lower flange (5b) extending to the center underframe side, said center underframe (2) has, in its upper part of the end as viewed in the direction of width of the car body, a flange (4c) extending to the side sill side, and a coupling member (14) in the lower part at the end as viewed in the direction of width of the car body; said upper flange (5a) of said side sill and said flange (4c) of said center underframe are overlapped and connected by means of a coupling means (13); and further said side sill lower flange (5b) and the coupling member of said center underframe are connected by the coupling member (13).

13. A car body of railway rolling stock as claimed in claim 11, wherein said side sill (5) has in its upper part an upper flange (5a) extending to the center underframe side and a coupling member (114) on the web thereof; said center underframe has an upper flange (104c) extending on the side sill side, in the upper part of the end section as viewed in the direction of width of the car body, and a lower flange (104e) extending to the side sill side, in the lower part of the end section as viewed in the direction of width of the car body; said upper flange (5a) of said side sill and said flange (104c) of said center underframe are overlapped and joined by the joining means (13); and further the coupling member (114) of said side sill and the lower flange (104e) of said center underframe are joined by the coupling means (13).

14. A car body of railway rolling stock as claimed in claim 10, wherein said side sill (205) has a vertical surface (205c) in a position close to the center underframe; said center underframe (204) has a vertical surface at the end as viewed in the direction of width of the car body; and said side sill and said center underframe are connected by the coupling means (13) with their vertical surfaces overlapped.

15. A car body of railway rolling stock comprising a roof framing (60), two side framings (40) each having framing members (41-48) formed of ferrous material, two end framings (70) and an underframe (1), wherein said underframe has a center underframe (2) produced of light-alloy extruded shapes, characterized in that said underframe (1) has an end underframe (3) produced of a ferrous material, in that said roof framing (60) is composed of a roof outer plate member (63) produced of stainless steel and roof frame members (61,62) produced of a ferrous material, in that said two side framings (40) have a side outer plate member (50) produced of a ferrous material, and in that said two end framings (70) are composed of end outer plates and end frame members produced of a ferrous material.

16. A method for fabricating a car body of railway rolling stock comprising steps of:
separately fabricating a roof framing (60), two side framings (40) each having framing members (41-48) formed of ferrous material, two end framings (70) and an underframe (1), wherein said underframe (1) has a center underframe (2,102,202,302) formed of light-alloy extruded shapes; and
assembling and joining them all together;
characterized by separately fabricating an end underframe (3) formed of ferrous material and a center underframe (2) which constitute an underframe (1);
joining by fitting said center underframe (2) to said end underframe (3);
disposing said side framings (40) on both ends of said underframe (1) as viewed in the direction of width of the car body, disposing said end framings (70) formed of ferrous material on both ends as viewed in the longitudinal direction of the car body, and further disposing said roof framing (60) formed of a ferrous material or stainless steel at the upper end section of said two side framings (40) and said two end framings (70); and then
joining said roof framing (60), said two side framing (40), said two end framings (70) and said underframe (1).

## Patentansprüche

1. Wagenkasten für das rollende Material von Eisenbahnen, mit einem Dachteil (60), zwei Seitenteilen (40) mit Rahmenelementen (41-48) aus Eisenmaterial, zwei Endteilen (70) und einem Unterbau (1), wobei der Unterbau (1) einen mittleren Unterbau (2, 102, 202, 302) aus Leichtmetall-Strangpreßprofilen umfaßt, dadurch **gekennzeichnet**, daß der Unterbau (1) einen End-Unterbau (3) aus Eisenmaterial aufweist, daß das Dachteil (60) und die beiden Endteile (70) jeweils mit einem äußeren Plattenelement (63) aus Eisenmaterial und Rahmenelementen (61, 62) aus Eisenmaterial versehen sind, und daß die beiden Seitenteile (40) ebenfalls mit äußeren Plattenelementen (50) aus Eisenmaterial versehen sind.

2. Wagenkasten für das rollende Material von Eisenbahnen nach Anspruch 1, wobei von dem äußeren Dach-Plattenelement (63) und von den Dach-Rahmenelementen (61, 62), die das Dachteil (60) bilden, wenigstens das äußere Plattenelement (63) des Daches aus rostfreiem Stahl hergestellt ist.

3. Wagenkasten für das rollende Material von Eisenbahnen nach Anspruch 1 oder 2, wobei von dem äußeren Seiten-Plattenelement (5) und den Seiten-Rahmenelementen (41-47), die die beiden Seitenteile (40) bilden, wenigstens das äußere Seiten-Plattenelement (50) aus Konstruktionsstahl hergestellt ist.

4. Wagenkasten für das rollende Material von Eisenbahnen nach einem der Ansprüche 1 bis 3, wobei der End-Unterbau (3), der den Unterbau (1) bildet, aus rostfreiem Stahl hergestellt ist.

5. Wagenkasten für das rollende Material von Eisenbahnen nach Anspruch 1, wobei der End-Unterbau (3) ein Bodenelement (11), das sich in der Längsrichtung des Wagenkastens erstreckt, und einen Querträger (10) aufweist, der an einer Stelle in der Nähe des mittleren Unterbaus am End-Unterbau angebracht ist; wobei der mittlere Unterbau (2, 102, 202) ein Leichtmetall-Verbindungselement (11b, 20a, 27) umfaßt, das durch Schweißen mit seinem in der Längsrichtung des Wagenkastens gelegenen Ende verbunden ist; und wobei das Verbindungselement (11b, 20a, 27) durch ein Befestigungselement (13) mit wenigstens dem Bodenelement (11) oder dem Querträger (10) verbunden ist.

6. Wagenkasten für das rollende Material von Eisenbahnen nach Anspruch 5, wobei das Bodenelement (11) eine Trapezplatte (11a) mit Nuten ist, die sich in der Längsrichtung des Wagenkastens erstrecken, und wobei der Verbindungsabschnitt des Leichtmetall-Verbindungselementes (11b) zum Verbinden mit der Trapezplatte eine gewellte Form hat, die der Form der Nuten in der Trapezplatte entspricht.

7. Wagenkasten für das rollende Material von Eisenbahnen nach Anspruch 1, wobei der End-Unterbau (3) ein Bodenelement (11), das sich in der Längsrichtung des Wagenkastens erstreckt, und einen Querträger (10, 110) aufweist, der in der Nähe des mittleren Unterbaus am End-Unterbau (3) angebracht ist; wobei der Querträger (10, 110) einen Befestigungsflansch (20b, 24, 110a) aufweist, der sich zum mittleren Unterbau hin erstreckt, wobei der Verbindungsflansch (20b, 24, 110a) mit dem mittleren Unterbau (202) durch eine Befestigungseinrichtung (13) verbunden ist; und wobei ein Füllmaterial (23) zwischen dem Ende des Bodenelementes (11) in der Nähe des mittleren Unterbaus und dem in der Längsrichtung des Wagenkastens gelegenen Ende des mittleren Unterbaus (202) eingefüllt ist.

8. Wagenkasten für das rollende Material von Eisenbahnen nach Anspruch 7, wobei der Befestigungsflansch (110a) durch Abbiegen des Querträgers (110) ausgebildet ist.

9. Wagenkasten für das rollende Material von Eisenbahnen nach Anspruch 7, wobei der Befestigungsflansch ein Halteelement (20b, 24) ist, das bezüglich des Querträgers (10, 110) ein separates Element ist, wobei das Halteelement (20b, 24) durch Schweißen mit dem Steg des Querträgers verbunden ist.

10. Wagenkasten für das rollende Material von Eisenbahnen nach Anspruch 1, wobei der End-Unterbau (3) Längsträger (5, 205, 305, 405) aufweist, die in der Richtung der Breite des Wagenkastens an den beiden Seiten des Unterbaus angeordnet sind und die sich in der Längsrichtung des Wagenkastens erstrecken, wobei der mittlere Unterbau (2, 102, 202) zwischen den Längsträgern (5, 205, 305, 405) angeordnet ist, und wobei die Längsträger (5, 205, 305, 405) mit dem in der Richtung der Breite des Wagenkastens gelegenen Ende des mittleren Unterbaus (2, 102, 202) durch eine Befestigungseinrichtung (13) verbunden sind.

11. Wagenkasten für das rollende Material von Eisenbahnen nach Anspruch 10, wobei die Längsträger (5, 305) Flansche (5a, 305a) aufweisen, die auf der Seite des mittleren Unterbaus verlaufen, wobei der mittlere Unterbau (2) einen Flansch (4c, 104c) aufweist, der sich an dem in der Richtung der Breite des Wagenkastens gelegenen Ende auf der Seite des Längsträgers erstreckt; und wobei sich der Flansch (5a, 305a) des Längsträgers und der Flansch (4c, 104c) des mittleren Unterbaus überlappen und durch ein Befestigungselement (13) miteinander verbunden sind.

12. Wagenkasten für das rollende Material von Eisenbahnen nach Anspruch 11, wobei der Längsträger (5) an seinem oberen Teil einen oberen Flansch (5a), der sich auf der Seite des mittleren Unterbaus erstreckt, und an seinem unteren Teil einen unteren Flansch (5b) aufweist, der sich auf der Seite des mittleren Unterbaus erstreckt, wobei der mittlere Unterbau (2) in seinem oberen Teil an dem in der Richtung der Breite des Wagenkastens gelegenen Ende einen Flansch (4c), der sich auf der Seite des Längsträgers erstreckt, und ein Befestigungselement (14) im unteren Teil an dem in der Richtung der Breite des Wagenkastens gelegenen Ende aufweist; wobei sich der obere Flansch (5a) des Längsträgers und der Flansch (4c) des mittleren Unterbaus überlappen und durch eine Befestigungseinrichtung (13) miteinander verbunden sind; und wobei des weiteren der untere Flansch (5b) des Längsträgers und das Befestigungselement des mittleren Unterbaus durch das Befestigungselement (13) verbunden sind.

13. Wagenkasten für das rollende Material von Eisenbahnen nach Anspruch 11, wobei der Längsträger (5) an seinem oberen Teil einen oberen Flansch (5a), der sich auf der Seite des mittleren Unterbaus erstreckt, und an seinem Steg ein Befestigungselement (114) aufweist; wobei der mittlere Unterbau einen oberen Flansch (104c), der sich auf der Seite des Längsträgers im oberen Teil des in Richtung der Breite des Wagenkastens gelegenen Endabschnittes erstreckt, und einen unteren Flansch (104e) aufweist, der sich auf der Seite des Längsträgers im unteren Teil des in Richtung der Breite des Wagenkastens gelegenen Endabschnittes erstreckt; wobei sich der obere Flansch (5a) des Längsträgers und der Flansch (104c) des mittleren Unterbaus überlappen und durch die Verbindungseinrichtung (13) miteinander verbunden sind; und wobei des weiteren das Befestigungselement (114) des Längsträgers und der untere Flansch (104e) des mittleren Unterbaus durch die Befestigungseinrichtung (13) verbunden sind.

14. Wagenkasten für das rollende Material von Eisenbahnen nach Anspruch 10, wobei der Längsträger (205) an einer Stelle in der Nähe des mittleren Unterbaus eine vertikale Fläche (205c) aufweist; wobei der mittlere Unterbau (204) an dem in der Richtung der Breite des Wagenkastens gelegenen Ende eine vertikale Fläche besitzt; und wobei der Längsträger und der mittlere Unterbau durch die Befestigungseinrichtung (13) mit sich überlappenden vertikalen Flächen verbunden sind.

15. Wagenkasten für das rollende Material von Eisenbahnen, mit einem Dachteil (60), zwei Seitenteilen (40) mit Rahmenelementen (41-48) aus Eisenmaterial, zwei Endteilen (70) und einem Unterbau (1), wobei der Unterbau einen mittleren Unterbau (2) aus Leichtmetall-Strangpreßprofilen umfaßt, dadurch **gekennzeichnet**, daß der Unterbau (1) einen End-Unterbau (3) aus Eisenmaterial aufweist, daß das Dachteil (60) aus einem äußeren Dach-Plattenelement (63) aus rostfreiem Stahl und Dach-Rahmenelementen (61, 62) aus Eisenmaterial zusammengesetzt ist, daß die beiden Seitenteile (40) ein äußeres Seiten-Plattenelement (50) aus Eisenmaterial aufweisen, und daß die beiden Endteile (70) aus äußeren Endplatten und End-Rahmenelementen aus Eisenmaterial zusammengesetzt sind.

16. Verfahren zum Herstellen des Wagenkastens für das rollende Material von Eisenbahnen, mit den Schritten
des separaten Herstellens eines Dachteiles (60), von zwei Seitenteilen (40) mit Rahmenelementen (41-48) aus Eisenmaterial, von zwei Endteilen (70) und von einem Unterbau (1), wobei der Unterbau (1) einen mittleren Unterbau (2, 102, 202, 302) aus Leichtmetall-Strangpreßprofilen umfaßt; und
des Zusammensetzens und Verbindens dieser Teile;
**gekennzeichnet** durch das separate Herstellen eines End-Unterbaus (3) aus Eisenmaterial und des mittleren Unterbaus (2), die den Unterbau (1) bilden;
das Verbinden des mittleren Unterbaus (2) mit dem End-Unterbau (3) durch Zusammensetzen;
das Anordnen der Seitenteile (40) an den in der Richtung der Breite des Wagenkastens gelegenen beiden Enden des Unterbaus (1), das Anordnen der Endteile (70) aus Eisenmaterial an den in der Längsrichtung gelegenen beiden Enden des Wagenkastens, und das Anordnen des Dachteiles (60) aus Eisenmaterial oder rostfreiem Stahl an den oberen Endabschnitten der beiden Seitenteile (40) und der beiden Endteile (70); und durch
das Verbinden des Dachteiles (60), der beiden Seitenteile (40), der beiden Endteile (70) und des Unterbaus (1).

## Revendications

1. Caisse de voiture de matériel ferroviaire roulant comprenant une structure de toit (60), deux structures latérales (40) comportant chacune des éléments de structure (41-48) formés d'un matériau ferreux, deux structures d'extrémité (70) et un châssis (1), ledit châssis (1) possédant un châssis central (2,102,202,302) constitué de profilés extrudés en alliage léger, caractérisée en ce que ledit châssis (1) possède un châssis d'extrémité (3) formé d'un matériau ferreux, en ce que ladite structure de toit (60) et lesdites deux structures d'extrémité (70) possèdent chacune des éléments extérieurs en forme de plaques (63) formés d'un matériau ferreux et des éléments de structure (61,62) formés d'un matériau ferreux, et en ce que lesdites structures latérales (40) possèdent également des éléments extérieurs en forme de plaques (50) formés d'un matériau ferreux.

2. Caisse de voiture de matériel ferroviaire roulant selon la revendication 1, dans laquelle parmi un élément extérieur en forme de plaque de toit (63) et des éléments de structure de toit (61,62) qui constituent ladite structure de toit (60), au moins ledit élément extérieur en forme de plaque de toit (63) est réalisé en acier inoxydable.

3. Caisse de voiture de matériel ferroviaire roulant selon la revendication 1 ou 2, dans laquelle, parmi ledit élément extérieur en forme de plaque (5) et lesdits éléments de structure latéraux (41-47) constituant lesdites deux structures latérales (40), au moins ledit élément extérieur en forme de plaque (50) est réalisé en acier de construction.

4. Caisse de voiture de matériel ferroviaire roulant selon l'une des revendications 1 à 3, dans laquelle un châssis d'extrémité (3) constituant ledit châssis (1) est réalisé en acier inoxydable.

5. Caisse de voiture de matériel ferroviaire roulant selon la revendication 1, dans laquelle ledit châssis d'extrémité (3) possède un élément de plancher (11) qui s'étend dans la direction longitudinale de la caisse de voiture, et une traverse (10) disposée dans une position proche du centre du châssis dudit châssis d'extrémité; ledit châssis central (2,102,202) possède un élément d'assemblage en alliage léger (11b,20a,27) devant être réuni par soudage à ses extrémités, vues dans la direction longitudinale de la caisse de voiture; et ledit élément d'assemblage (11b,20a, 27) est connecté par un élément d'accouplement (13) audit élément de plancher (11) et/ou à ladite traverse (10).

6. Caisse de voiture de matériel ferroviaire roulant selon la revendication 5, dans laquelle ledit élément de plancher (11) est une plaque trapézoïdale (11a) possédant une rainure qui s'étend dans la direction longitudinale de la caisse de voiture, et une section d'assemblage dudit élément d'assemblage en alliage léger (11b) pour réaliser l'assemblage de la plaque trapézoïdale, possède une forme ondulée qui correspond à la forme de la rainure ménagée dans la plaque trapézoïdale.

7. Caisse de voiture de matériel ferroviaire roulant selon la revendication 1, dans laquelle ledit châssis d'extrémité (3) possède un élément de plancher (11) qui s'étend dans la direction longitudinale de la caisse de voiture et une traverse (10,110) disposée à proximité du centre du châssis dudit châssis d'extrémité (3); la traverse (10,110) possède une bride d'accouplement (20b,24,110a) qui s'étend en direction d'un châssis central, ladite bride d'assemblage (20b,24,110a) étant connectée à un châssis central (202) par l'intermédiaire de moyens d'accouplement (13); et un matériau de remplissage (23) est inséré entre l'extrémité dudit élément de plancher (11) proche dudit châssis central et l'extrémité dudit châssis central (202) dans la direction longitudinale de la caisse de voiture.

8. Caisse de voiture de matériel ferroviaire roulant selon la revendication 7, dans laquelle ladite bride d'accouplement (110a) est formée par coudage de ladite traverse (110).

9. Caisse de voiture de matériel ferroviaire roulant selon la revendication 7, dans laquelle ladite bride d'accouplement est un élément de support (20b,24), qui est un élément séparé de ladite traverse (10,110), ledit élément de support (20b,24) étant réuni par soudage à l'âme de ladite traverse.

10. Caisse de voiture d'un matériel ferroviaire roulant selon la revendication 1, dans laquelle ledit châssis d'extrémité (3) possède des longerons latéraux (5, 205,305,405) disposés des deux côtés du châssis, vus dans le sens de la largeur de la caisse de voiture, et qui s'étendent dans la direction longitudinale de la caisse de voiture, et ledit châssis central (2,102,202) est disposé entre lesdits longerons latéraux (5,205,305,405), lesdits longerons latéraux (6,205,305,405) étant raccordés à l'extrémité dudit châssis central (2,102,202) dans le sens de la largeur de la caisse de voiture, par des moyens d'accouplement (13).

11. Caisse de voiture de matériel ferroviaire roulant selon la revendication 10, dans laquelle lesdits longerons latéraux (5,305) possèdent des brides (5a,205a) qui s'étendent en direction du côté du châssis central; ledit châssis central (2) possède une bride (4c,104c), qui s'étend du côté du longeron latéral, au niveau de l'extrémité, lorsqu'on regarde dans la direction de l'étendue en largeur de la caisse de voiture; et la bride (5a,305a) dudit longeron latéral et la bride (4c,104c) dudit châssis central se chevauchent et sont réunies par un élément d'accouplement (13).

12. Caisse de voiture de matériel ferroviaire roulant selon la revendication 11, dans laquelle ledit longeron latéral (5) possède, dans sa partie supérieure, une bride supérieure (5a) s'étendant du côté du châssis central et, à sa partie inférieure, une bride inférieure (5b) s'étendant du côté du chassis central, ledit châssis central (5) possède, dans sa partie supérieure de l'extrémité vue dans la direction de l'étendue en largeur de la caisse de voiture, une bride (4c) qui s'étend du côté du longeron latéral, et un élément d'accouplement (14) situé dans la partie inférieure et à l'extrémité vue dans la direction de l'étendue en largeur de la caisse de voiture; ladite bride supérieure (5a) dudit longeron latéral et ladite bride (4c) dudit châssis central se chevauchent et sont raccordées à l'aide de moyens d'accouplement (13), et en outre ladite bride inférieure (5b) du longeron latéral et l'élément d'accouplement dudit châssis central sont raccordés par l'élément d'accouplement (13).

13. Caisse de voiture de matériel ferroviaire roulant selon la revendication 11, dans laquelle ledit longeron latéral (5) possède, dans sa partie supérieure, une bride supérieure (5a) qui s'étend du côté du châssis central, et un élément d'accouplement (114) sur l'âme de cette bride; ledit châssis central possède une bride supérieure (104c) qui s'étend du côté du longeron latéral, dans la partie supérieure de la section d'extrémité vue dans la direction étendue en largeur de la caisse de voiture, et une bride inférieure (104a) qui s'étend du côté du longeron latéral, dans la partie inférieure de la section d'extrémité vue dans la direction de l'étendue en largeur de la caisse de voiture; ladite bride supérieure (5a) dudit longeron latéral et ladite bride (104c) dudit châssis central se chevauchent et sont réunies par les moyens d'assemblage (13); et en outre l'élément d'accouplement (104) dudit longeron latéral et la bride inférieure (104a) dudit châssis central sont réunis par les moyens d'accouplement (13).

14. Caisse de voiture de matériel ferroviaire roulant selon la revendication 10, dans laquelle ledit longeron latéral (205) possède une surface verticale (205c) dans une position proche du châssis central; ledit châssis central (204) possède une surface verticale au niveau de l'extrémité vue dans la direction de l'étendue en largeur de la carrosserie du véhicule; et ledit longeron latéral et ledit châssis central sont connectés par les moyens d'accouplement (13), avec leurs surfaces verticales en chevauchement.

15. Caisse de voiture de matériel ferroviaire roulant comprenant une structure de toit (60), deux structures latérales (15) possédant chacune des éléments de structures (41-48) formées d'un matériau ferreux, deux structures d'extrémité (70) et un châssis (1), et dans laquelle ledit châssis possède un châssis central (2) constitué par des profilés extrudés en alliage léger, caractérisée en ce que ledit châssis (1) possède un châssis d'extrémité (3) formé d'un matériau ferreux, en ce que ladite structure de toit (60) est constituée par un élément extérieur en forme de plaque de toit (63) réalisé en acier inoxydable et des éléments de structure de toit (61,62) réalisés en un matériau ferreux, en ce que lesdites deux structures latérales (40) possèdent un élément latéral extérieur en forme de plaque (50) réalisé en un matériau ferreux, en ce que lesdites deux structures d'extrémité (70) sont constituées par des plaques extérieures d'extrémité et des éléments en forme de cadres d'extrémité réalisés en un matériau ferreux.

16. Procédé pour fabriquer une caisse de voiture de matériel ferroviaire roulant, comprenant les étapes consistant à :
fabriquer séparément une structure de toit (60), deux structures latérales (40) possédant chacune des éléments de structure (41-48) réalisés en un matériau ferreux, deux structures d'extrémité (70) et un châssis (1), ledit châssis (1) possédant un châssis central (2,102,202,302) constitué de profilés extrudés en alliage léger; et
assembler et réunir tous ces éléments entre eux;
caractérisé en ce qu'il consiste à fabriquer séparément un châssis d'extrémité (3) formé d'un matériau ferreux et un châssis central (2) qui constitue un châssis (1);
réunir par ajustement ledit châssis central (2) audit châssis d'extrémité (3),
disposer lesdites structures latérales (40) aux deux extrémités dudit châssis (1), lorsqu'on regarde dans la direction de l'étendue en largeur de la caisse de voiture, disposer lesdites structures d'extrémité (70) formées d'un matériau ferreux sur les deux extrémités vues dans la direction longitudinale de la caisse de voiture, et disposer en outre ladite structure de toit (60) réalisée en un matériau ferreux ou en acier inoxydable sur la section d'extrémité supérieure desdites structures (40) et desdites deux structures d'extrémité (70); et ensuite
réunir ladite structure de toit (60), lesdites deux structures latérales (40), lesdites deux structures d'extrémité (70) et ledit châssis (1).
